# EUROPÄISCHE PATENTANMELDUNG

(11) **EP 0 953 814 A2**
(43) Veröffentlichungstag der Anmeldung: **03.11.1999**
(21) Anmeldenummer: 99104998.2
(22) Anmeldetag: 12.03.1999
(51) Int. Cl.: F28C 1/14

(54) **Hybridkühlanlage**

(30) Priorität: 28.04.1998 DE 19818922
(71) Anmelder: GEA Energietecknik GmbH, 44809 Bochum (DE)
(72) Erfinder: Vodicka, Vladimir, Dipl.-Ing., 44801 Bochum (DE)
(74) Vertreter: Bockermann, Rolf, Dipl.-Ing.

(57) **Zusammenfassung**

Die Hybridkühlanlage weist wenigstens einen Sektor (1) mit einem von einer Förderpumpe (13) beaufschlagbaren, parallel geschaltete Wärmetauscher (5-8) umfassenden Trockenkühlteil (3) und einen unterhalb des Trockenkühlteils (3) liegenden Nasskühlteil (9) auf. Die höchsten Stellen (18) der Wärmetauscher (5-8) sind über Entlüftungsleitungen (19-22) an einen Entlüftungstopf (23) angeschlossen. Diesem ist eine Entwässerungsleitung (39) zugeordnet, die unterhalb des Wasserspiegels (40) eines tiefer als die Wärmetauscher (5-8) liegenden Wassersammelbeckens (12) mündet. Der Entlüftungstopf (23) ist ferner über eine Belüftungsleitung (37) mit integriertem Belüftungsventil (38) an die Umgebung (36) anschließbar sowie über eine Evakuierungsleitung (33) mit darin eingegliedertem, mit den den Wärmetauschern (5-8) zugeordneten Füllstandsgrenzschaltern (24-27) gekoppelten Evakuierungsventil (32) mit einer Vakuumpumpe (34) verbunden.

## Beschreibung

Die Erfindung betrifft eine Hybridkühlanlage gemäß den Merkmalen im Oberbegriff des Anspruchs 1.

Eine Hybridkühlanlage weist mindestens einen Sektor mit einem Trockenkühlteil und einem Nasskühlteil auf. Mehrere Sektoren können in Form von einzelnen Hybridkühltürmen in Reihe hintereinander angeordnet werden. Die Hybridkühltürme besitzen dann in der Regel in der Horizontalen einen rechteckigen Querschnitt. Die Sektoren können aber auch Bestandteile eines einzigen in der Horizontalen im Querschnitt runden oder mehreckigen Hybridkühlturms bilden. Unabhängig davon, ob die Sektoren in Reihe hintereinander oder auf einem Kreis angeordnet sind, ist es üblich, dass dann alle Sektoren mit dem zu kühlenden Wasser parallel beaufschlagt werden.

Jeder Sektor besteht aus einem Trockenkühlteil mit mindestens zwei Wärmetauschern und einem Nasskühlteil mit Rieselelementen unterhalb der Wärmetauscher. Sowohl der Trockenkühlteil als auch der Naßkühlteil werden, gegebenenfalls zwangsweise, mit Kühlluft beaufschlagt. Das zu kühlende Wasser wird mit Hilfe einer Förderpumpe zunächst über den Trockenkühlteil geführt und anschließend zur Einsparung von Pumpenenergie kraftschlüssig in den Nasskühlteil geleitet. Von hier fällt das dann gekühlte Wasser in ein unterhalb des Nasskühlteils befindliches Wassersammelbecken.

Zur Leistungsregelung einer insbesondere aus mehreren Sektoren bestehenden Hybridkühlanlage oder zu Wartungs-bzw. Reparaturzwecken ist es bekannt, einzelne Sektoren, mehrere Wärmetauscher eines Sektors oder auch einzelne Wärmetauscher zeitweise abzuschalten, das heißt aus dem Kühlbetrieb zu nehmen. Während bei der ersten Inbetriebnahme einer Hybridkühlanlage die das zu kühlende Wasser in die Hybridkühlanlage drückende Förderpumpe aufgrund ihrer Betriebscharakteristik und der gleichartigen Ausbildung aller Wärmetauscher das Wasser bis zu den höchsten Stellen der Wärmetauscher drückt, ist es bei der Wiederinbetriebnahme eines abgeschalteten Sektors oder Wärmetauschers erforderlich, jeden abgeschalteten Wärmetauscher wieder mit Wasser zu befüllen. Dazu wird eine einen Unterdruck erzeugende Vakuumpumpe eingesetzt. Eine derartige Vakuumpumpe ist auch zur Aufrechterhaltung des Kraftschlusses (Siphonwirkung) zwischen dem Trockenkühlteil und dem Nasskühlteil notwendig. Hierfür wird mindestens für alle Wärmetauscher der Hybridkühlanlage eine gemeinsame Vakuumpumpe benötigt. Diese Vakuumpumpe ist dann über diverse Entlüftungsleitungen mit den höchsten Stellen der Wärmetauscher verbunden, damit eine vollständige Entlüftung bewirkt wird.

Um sicherzustellen, dass bei der Wiederinbetriebnahme die Vakuumpumpe das Wasser nicht in die Entlüftungsleitungen saugt und dadurch überflutet wird, werden jedem Wärmetauscher geeignete Füllstandsgrenzschalter sowie Evakuierungs- und Belüftungsventile zugeordnet. Da im Prinzip jedem Wärmetauscher ein Füllstandsgrenzschalter, ein mit diesem gekoppeltes Evakuierungsventil und ein Belüftungsventil zugeordnet ist, bedeutet dies bei Hybridkühlanlagen mit in der Regel mehreren Sektoren eine vergleichsweise große Anzahl an Ventilen. Hinzu tritt noch der Aufwand für die Leitungsmechanik und die elektronische Fernsteuerung. Diese große Anzahl an Ventilen ist nicht nur mit erheblichen Anschaffungs-, Anschluss- und Wartungskosten verbunden, sondern es besteht darüberhinaus die Gefahr, dass bei einem Ausfall nur eines Ventils die gesamte Evakuierungsanlage außer Betrieb gesetzt wird.

Der Erfindung liegt ausgehend vom Stand der Technik die Aufgabe zugrunde, eine Hybridkühlanlage zu schaffen, welche mit einer deutlich geringeren Anzahl an Ventilen auskommt und bei der eine Überflutung der Vakuumpumpe ausgeschlossen werden kann.

Die Lösung dieser Aufgabe besteht nach der Erfindung in den im kennzeichnenden Teil des Anspruchs 1 aufgeführten Merkmalen.

Danach werden die an die höchsten Stellen der funktionsmäßig eine Einheit bildenden Wärmetauscher eines Sektors angeschlossenen Entlüftungsleitungen mit einem bevorzugt zentral des Sektors liegenden Entlüftungstopf verbunden. Wieviele Wärmetauscher jeweils in einem Sektor funktionsmäßig eine Einheit bilden, hängt von den örtlichen Bedingungen ab. Der Entlüftungstopf ist über eine Entwässerungsleitung bis unter den Wasserspiegel eines tiefer als die Wärmetauscher liegenden Wassersammelbeckens geführt.

Ein solches Wassersammelbecken kann beispielsweise das dem Nasskühlteil zugeordnete Wassersammelbecken sein. Das Eintauchen der Entwässerungsleitung in das Wasser ist von Bedeutung, um eine Evakuierung des gesamten Systems zu ermöglichen.

Die Entwässerungsleitung geht bevorzugt von der tiefsten Stelle des Entlüftungstopfs aus. Oberhalb des Anschlusses der Entwässerungsleitung an den Entlüftungstopf münden die an die höchsten Stellen der Wärmetauscher angeschlossenen Entlüftungsleitungen.

Im oberen Höhenbereich des Entlüftungstopfs ist eine einzige Belüftungsleitung angeschlossen, in die ein Belüftungsventil eingegliedert ist. Die Belüftungsleitung steht mit der Umgebung in Verbindung.

Ferner ist an den oberen Höhenbereich des Entlüftungstopfs eine einzige Evakuierungsleitung angeschlossen, welche zu der Vakuumpumpe führt und in die ein Evakuierungsventil eingegliedert ist.

Von Bedeutung ist mithin im Rahmen der Erfindung, dass an den möglichst zentral angeordneten Entlüftungskopf jeweils nur eine Evakuierungsleitung, eine Belüftungsleitung und eine Entwässerungsleitung angeschlossen ist.

Diese Maßnahme ermöglicht es jetzt, dass bei der Wiederinbetriebnahme beispielsweise eines Wärmetauschers von mehreren in einem Sektor vorgesehenen Wärmetauschern nach dem Öffnen des zwischen der Zuführungsleitung und dem Wärmetauscher in einer Stichleitung befindlichen Absperrorgans die Förderpumpe das zu kühlende Wasser über das Absperrorgan in den Wärmetauscher drückt. Die Förderpumpe wird hierbei durch die Vakuumpumpe unterstützt und dadurch auf ihrem Betriebspunkt gehalten. Da das in den wieder zu befüllenden Wärmetauscher strömende zu kühlende Wasser dem Wasser nachgezogen wird, das aufgrund der permanent laufenden Förderpumpe in die anderen weiterhin im Betrieb befindlichen Wärmetauscher gedrückt wird, fließt das Wasser, was mit Hilfe der Vakuumpumpe über den wieder zu befüllenden Wärmetauscher angezogen wird und über die Entlüftungsleitung zwischen diesem Wärmetauscher und dem Entlüftungstopf in diesen gelangt, zwangsläufig über die zentrale Entwässerungsleitung in das Wassersammelbecken ab. Erst wenn der dem wieder zu befüllenden Wärmetauscher zugeordnete Füllstandsgrenzschalter feststellt, dass der Wärmetauscher ordnungsgemäß gefüllt ist, wird über die Steuerleitung zwischen diesem Füllstandsgrenzschalter und dem Evakuierungsventil ein Signal an das Evakuierungsventil gegeben, so dass dieses schließt.

Selbst beim Versagen des Evakuierungsventils wird das Wasser zwar weiter über die Entlüftungsleitung in den Entlüftungstopf angesaugt, es fließt aber aufgrund des in der Entwässerungsleitung im Vergleich zum Wärmetauscher niedrigeren Wasserspiegels in das Wassersammelbecken ab. Eine Überflutung der Vakuumpumpe ist ausgeschlossen.

Zum Abschalten mindestens eines Wärmetauschers muss zwecks Entleeren das an der höchsten Stelle jedes Wärmetauschers herrschende Vakuum gebrochen werden. In diesem Fall wird dann das in die Belüftungsleitung integrierte Belüftungsventil geöffnet.

In Weiterbildung des erfindungsgemäßen Grundgedankens ist gemäß Anspruch 2 die geodätische Höhendifferenz zwischen dem Wasserspiegel und der Anschlussstelle der Evakuierungsleitung an den Entlüftungstopf größer als der in mWS ausgedrückte maximale Ansaugdruck der Vakuumpumpe bemessen. Aufgrund dieses Sachverhalts kann das Wasser in der Entwässerungsleitung immer auf einer bestimmten Höhe gehalten werden. Folglich ist in jedem Fall sichergestellt, dass sogar bei einer insbesondere mechanischen Beschädigung des Evakuierungsventils im Sinne einer Offenstellung dann kein Wasser von der Vakuumpumpe über den Entlüftungstopf gezogen werden und in die Vakuumpumpe gelangen kann.

Ein weiteres Merkmal der Erfindung wird in den Merkmalen des Anspruchs 3 erblickt. Danach ist in den Längenabschnitt der Evakuierungsleitung zwischen dem Evakuierungsventil und der Vakuumpumpe ein Unterdruckbegrenzungsventil integriert. Dieses Unterdruckbegrenzungsventil hat zunächst die Aufgabe, die Lebensdauer der Vakuumpumpe zu erhöhen. Diese wird nämlich erfahrungsgemäß nicht bei Bedarf ein- und wieder ausgeschaltet, sondern die Fachwelt lässt die Vakuumpumpe permanent laufen. Damit sie dann aber keinen Kavitationseinflüssen ausgesetzt ist, sorgt das Unterdruckbegrenzungsventil beim Schließen des Evakuierungsventils dafür, dass die Vakuumpumpe ständigLuft ansaugen kann und auf diese Weise den Leitungsabschnitt zwischen dem Evakuierungsventil und der Vakuumpumpe ständig unter einem bestimmten Unterdruck hält.

Eine weitere Funktion hat das Unterdruckbegrenzungsventil dahingehend, dass es das Wasser in der Entwässerungsleitung immer auf einer bestimmten Höhe hält. Dazu ist das Unterdruckbegrenzungsventil ständig auf einen geregelten Unterdruck in der Evakuierungsleitung eingestellt.

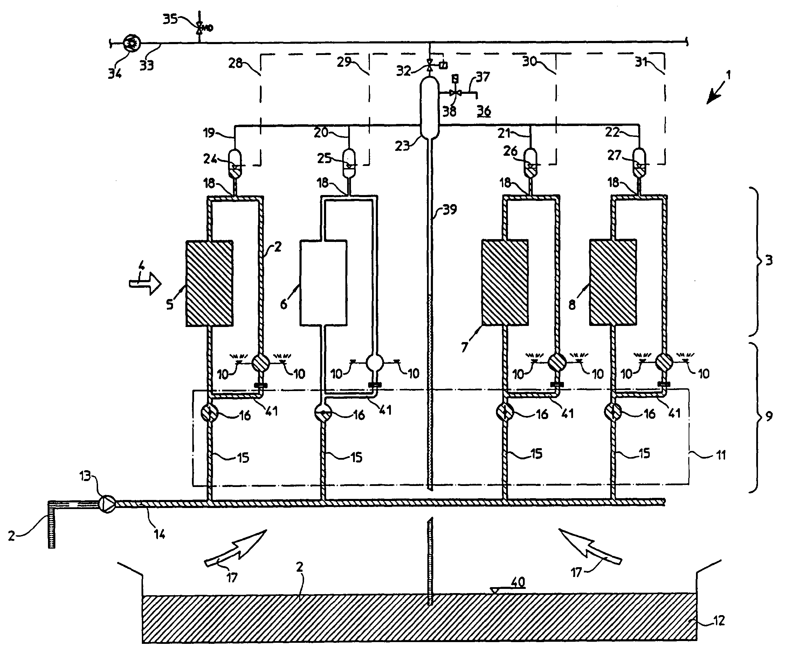

Die Erfindung ist nachfolgend anhand eines in der Zeichnung dargestellten Ausführungsbeispiels näher erläutert.

Mit 1 ist in der Figur ein Sektor einer ansonsten nicht näher dargestellten, aus mehreren Sektoren bestehenden Hybridkühlanlage zur Kühlung von heißem Wasser 2 bezeichnet.

Der Sektor 1 weist einen Trockenkühlteil 3 mit vier durch Kühlluft 4 beaufschlagten Wärmetauschern 5, 6, 7, 8 und einen geodätisch unter den Wärmetauschern 5-8 liegenden Nasskühlteil 9 mit einer Vielzahl von Düsentöpfen 10 auf. Unterhalb der Düsentöpfe 10 befinden sich Rieselelemente 11 und darunter ist ein Wassersammelbecken 12 angeordnet.

Das zu kühlende heiße Wasser 2 wird mit Hilfe einer Förderpumpe 13 über eine Zuführungsleitung 14 und Stegleitungen 15 in die Wärmetauscher 5-8 gefördert. Dabei sind in die Stegleitungen 15 eingegliederte Absperrorgane 16 offen geschaltet. Aus den Wärmetauschern 5-8 gelangt das vorgekühlte Wasser 2 in den Nasskühlteil 9, wo es mittels der Düsentöpfe 10 über die Rieselelemente 11 gesprüht wird und hier in einen Wärme austauschenden Kontakt mit Kühlluft 17 tritt. Das gekühlte Wasser fällt dann in das Wassersammelbecken 12 und wird von hier der weiteren Verwendung zugeführt.

Die höchsten Stellen 18 der Wärmetauscher 5-8 sind über Entlüftungsleitungen 19-22 an einen im Sektor 1 zentral angeordneten Entlüftungstopf 23 angeschlossen. In die Entlüftungsleitungen 19-22 sind Füllstandsgrenzschalter 24-27 integriert, die über Steuerleitungen 28-31 mit einem Evakuierungsventil 32 gekoppelt sind, welches in eine im oberen Höhenbereich an den Entlüftungstopf 23 angeschlossene Evakuierungsleitung 33 eingegliedert ist. Die Evakuierungsleitung 33 führt zu einer Vakuumpumpe 34. An den Längenabschnitt der Evakuierungsleitung 33 zwischen dem Evakuierungsventil 32 und der Vakuumpumpe 34 ist ein Unterdruckbegrenzungsventil 35 angeschlossen.

Ferner ist an den oberen Höhenbereich des Entlüftungstopfs 23 eine mit der Umgebung 36 verbundene Belüftungsleitung 37 angeschlossen. In die Belüftungsleitung 37 ist ein Belüftungsventil 38 integriert.

An die unterste Stelle des Entlüftungstopfs 23 ist eine Entwässerungsleitung 39 angeschlossen, die unterhalb des Wasserspiegels 40 des Wassers 2 im Wassersammelbecken 12 mündet.

Oberhalb der Absperrorgane 16 sind zwischen den Düsentöpfen 10 und den Stegleitungen 15 Kurzschlussleitungen 41 mit nicht näher dargestellten Lochblechen zur Durchflussbegrenzung vorgesehen.

Bei der ersten Inbetriebnahme des Sektors 1 wird das Wasser 2 aufgrund der Betriebscharakteristik der Förderpumpe 13 und der gleichartigen Ausführung aller Wärmetauscher 5-8 mit Hilfe der Förderpumpe 13 bis zu den höchsten Stellen 18 der Wärmetauscher 5-8 gedrückt. Nach dem Erreichen der höchsten Stellen fällt das Wasser 2 in den geodätisch tiefer liegenden Nasskühlteil 9 und zieht somit weiteres Wasser 2 nach. Die Förderpumpe 13 braucht dann nur die Höhe zwischen der Förderpumpe 13 und dem Nasskühlteil 9 zu überwinden. Das Wasser 2 wird also vom Nasskühlteil 9 aus dem Trockenkühlteil 3 kraftschlüssig nachgezogen.

Soll nun beispielsweise der Wärmetauscher 6 gewartet werden, so ist es zunächst erforderlich, das Absperrorgan 16 in der Stegleitung 15 zu schließen und anschließend das Belüftungsventil 38 zu öffnen. Hierdurch wird das an der höchsten Stelle 18 des Wärmetauschers 6 herrschende Vakuum gebrochen. Das Wasser 2 läuft dann aus dem Wärmetauscher 6 über den Nasskühlteil 9 in das Wassersammelbecken 12 ab. Die Kurzschlussleitung 41 unterstützt hierbei den Entleerungsvorgang. Während dieser Maßnahme läuft die Förderpumpe 13 weiter, so dass der Sektor 1 an sich mit den drei anderen Wärmetauschern 5, 7 und 8 in Betrieb bleibt. Auch die Vakuumpumpe 34 läuft kontinuierlich weiter. Das Evakuierungsventil 32 ist geschlossen. Das Unterdruckbegrenzungsventil 35 ist so eingestellt, dass die Vakuumpumpe 34 permanent Luft ansaugen kann und den Längenabschnitt der Evakuierungsleitung 33 zwischen dem Evakuierungsventil 32 und der Vakuumpumpe 34 unter einem bestimmten Unterdruck hält.

Nach dem Entleeren des Wärmetauschers 6 wird das Belüftungsventil 38 wieder geschlossen.

Sind die Wartungsarbeiten am Wärmetauscher 6 abgeschlossen und soll dieser Wärmetauscher 6 wieder in Betrieb genommen werden, wird zunächst das Absperrorgan 16 in der Stegleitung 15 geöffnet. Anschließend wird auch das Evakuierungsventil 32 geöffnet. Die Förderpumpe 13 drückt dann das Wasser 2 über die Stegleitung 15 in den Wärmetauscher 6, wobei die Leistung der Förderpumpe 13 durch die Vakuumpumpe 34 unterstützt und somit die Förderpumpe 13 auf ihrem Betriebspunkt gehalten wird.

Außerdem wird durch die Kurzschlussleitung 41 ein Teil des Wassers 2 in die Düsentöpfe 10 gedrückt, wodurch die Düsen gegenüber der Atmosphäre luftdicht verschlossen werden. Die Vakuumpumpe 34 kann dann einen Unterdruck zur Unterstützung der Förderpumpe 13 aufbauen.

Da das in den wieder zu befüllenden Wärmetauscher 6 gepumpte Wasser 2 vom Nasskühlteil 9 nach dem Wasser 2 nachgezogen wird, das aus den drei anderen Wärmetauschern 5, 7 und 8 vom Nasskühlteil 9 nachgezogen wird, fließt das Wasser 2, was mit Hilfe der Vakuumpumpe 34 zusätzlich in den Wärmetauscher 6 gesogen wird und dadurch über die Entlüftungsleitungen 20 und 19 in den Entlüftungstopf 23 gelangt, anschließend zwangsläufig über die Entwässerungsleitung 39 in das Wassersammelbecken 12 ab. Hat das Wasser 2 dann den Füllstandsgrenzschalter 25 des Wärmetauschers 6 erreicht, wird ein Signal an das Evakuierungsventil 32 gegeben und dieses geschlossen.

Der Sektor 1 ist dann wieder komplett befüllt.

### Bezugszeichenaufstellung

- 1 -: Sektor
- 2 -: heißes Wasser
- 3 -: Trockenkühlteil
- 4 -: Kühlluft
- 5 -: Wärmetauscher
- 6 -: Wärmetauscher
- 7 -: Wärmetauscher
- 8 -: Wärmetauscher
- 9 -: Nasskühlteil
- 10 -: Düsentöpfe
- 11 -: Rieselelemente
- 12 -: Wassersammelbecken
- 13 -: Förderpumpe
- 14 -: Zuführungsleitung
- 15 -: Steigleitungen
- 16 -: Absperrorgane in 15
- 17 -: Kühlluft
- 18 -: höchste Stellen v. 5-8
- 19 -: Entlüftungsleitung v. 5
- 20 -: Entlüftungsleitung v. 6
- 21 -: Entlüftungsleitung v. 7
- 22 -: Entlüftungsleitung v. 8
- 23 -: Entlüftungstopf
- 24 -: Füllstandsgrenzschalter in 19
- 25 -: Füllstandsgrenzschalter in 20
- 26 -: Füllstandsgrenzschalter in 21
- 27 -: Füllstandsgrenzschalter in 22
- 28 -: Steuerleitung zw. 24 u. 32
- 29 -: Steuerleitung zw. 25 u. 32
- 30 -: Steuerleitung zw. 26 u. 32
- 31 -: Steuerleitung zw. 27 u. 32
- 32 -: Evakuierungsventil in 33
- 33 -: Evakuierungsleitung
- 34 -: Vakuumpumpe
- 35 -: Unterdruckbegrenzungsventil
- 36 -: Umgebung
- 37 -: Belüftungsleitung
- 38 -: Belüftungsventil
- 39 -: Entwässerungsleitung
- 40 -: Wasserspiegel
- 41 -: Kurzschlussleitungen

## Patentansprüche

1. Hybridkühlanlage, die wenigstens einen Sektor (1) mit einem von einer Förderpumpe (13) beaufschlagbaren, mindestens zwei parallel geschaltete Wärmetauscher (5-8) umfassenden Trockenkühlteil (3) und mit einem unterhalb des Trockenkühlteils (3) liegenden Nasskühlteil (9) aufweist, der mit dem Trockenkühlteil (3) im Kraftschluss verbunden ist, wobei die höchsten Stellen (18) der Wärmetauscher (5-8) über eine Entlüftungsleitung (19-22) mit einer Vakuumpumpe (34) verbunden und den Wärmetauschern (5-8) Evakuierungs- und Belüftungsventile (32, 38) sowie Füllstandsgrenzschalter (24-27) zugeordnet sind, **dadurch gekennzeichnet**, dass die Entlüftungsleitungen (19-22) der funktionsmäßig eine Einheit bildenden Wärmetauscher (5-8) eines Sektors (1) an einen Entlüftungstopf (23) angeschlossen sind,dem eine Entwässerungsleitung (39) zugeordnet ist, die unterhalb des Wasserspiegels (40) eines tiefer als die Wärmetauscher (5-8) liegenden Wassersammelbeckens (12) mündet, und welcher über eine Belüftungsleitung (37) mit integriertem Belüftungsventil (38) an die Umgebung (36) anschließbar sowie über eine Evakuierungsleitung (33) mit darin eingegliedertem, mit den den Wärmetauschern (5-8) zugeordneten Füllstandsgrenzschaltern (24-27) gekoppeltem Evakuierungsventil (32) mit der Vakuumpumpe verbunden ist.

2. Hybridkühlanlage nach Anspruch 1, **dadurch gekennzeichnet**, dass die geodätische Höhendifferenz zwischen dem Wasserspiegel (40) und der Anschlussstelle der Evakuierungsleitung (33) an den Entlüftungstopf (23) größer als der in Metern Wassersäule (mWS) ausgedrückte maximale Ansaugdruck der Vakuumpumpe (34) bemessen ist.

3. Hybridkühlanlage nach Anspruch 1 oder 2, **dadurch gekennzeichnet**, dass an die Evakuierungsleitung (33) zwischen dem Evakuierungsventil (32) und der Vakuumpumpe (34) ein Unterdruckbegrenzungsventil (35) angeschlossen ist.
